# FASCICULE DE BREVET EUROPEEN

(11) **EP 0 848 908 B1**
(45) Date de publication et mention de la délivrance du brevet: **07.08.2002**
(21) Numéro de dépôt: 96203263.7
(22) Date de dépôt: 21.11.1996
(51) Int. Cl.: A21D 2/18, A21D 6/00, A21D 8/04, A21D 2/32

(54) **Procédé de fabrication de produits de panification pouvant être réchauffés aux micro-ondes**
Verfahren zur Herstellung von Mikrowellen aufwärmbaren Brotprodukte
Process for the preparation of bread products to be reheated by microwaves

(43) Date de publication de la demande: 24.06.1998
(73) Titulaire: SOCIETE DES PRODUITS NESTLE S.A., 1800 Vevey (CH)
(72) Inventeur: Dupart, Pierre, 8405 Winterthur (CH); Nilson, Urban, 22471 Luden (SE); Sartorio, Claude, Lake Bluff, I1, 60044 (US)
(74) Mandataire: Wavre, Claude-Alain

(56) Documents cités:
- EP-A- 0 153 870
- WO-A-91/01091
- WO-A-95/26641
- WO-A-96/32026
- DE-B- 1 244 086

## Description

La présente invention a pour objet un procédé de préparation d'un produit de panification.

Il est connu que la texture des produits de panification traditionnels subit une détérioration, lors de la réchauffe aux micro-ondes. En effet, dans ces produits, lors de la réchauffe aux micro-ondes, la distribution de la teneur en eau est hétérogène et, de ce fait, ces produits présentent une texture caoutchouteuse, dure à mastiquer et une surface soit mouillée, soit desséchée.

Par ailleurs, US 5110614 décrit, d'une part, un prémélange et, d'autre part, un mélange, sous forme séchée, destinés à être ajoutés à des ingrédients traditionnellement utilisés dans la fabrication de produits de panification. Du fait de l'ajout de ce prémélange ou de ce mélange, ces produits de panification sont susceptibles d'être réchauffés aux micro-ondes. Le prémélange comprend 0-20 parties en poids de poudre de lait, 7-55 parties en poids de matière grasse et 0-5 parties en poids d'oeufs entiers en poudre. A ce prémélange sont ensuite incorporés 22-55 parties en poids de farine de blé dur et 0-20 parties en poids de dextrose. Le mélange décrit, lui, comprend 46-80 parties en poids de farine, 4-22 parties en poids de matière grasse, 6-11 parties en poids de protéines, 0-12 parties en poids de dextrose, 0-12 parties en poids de sucre, 0-3 parties en poids d'amidon de maïs, 0-3 parties en poids de monoglycérides et/ou de lécithine, 0-3 parties en poids de sel et 0-2 parties en poids de cellulose microcristaline. Dans la préparation de ce mélange, les protéines et la matière grasse sont associées puis la farine et les autres ingrédients sont ajoutés.

WO 96/32 026 décrit un procédé pour la fabrication d'un produit alimentaire à cuire ou à réchauffer aux micro-ondes, dans lequel le produit est enrobé d'un liquide comprenant au moins des matières amylacées, une ou des amylases, un gélifiant, et éventuellement de l'oeuf séché et un émulsifiant.

La présente invention a pour but de proposer un procédé simple et rapide permettant de réaliser des produits de panification microondables présentant des propriétés physiques et des qualités organoleptiques semblables à celles des produits de panification traditionnels réchauffés dans un four conventionnel.

A cet effet, dans le procédé de préparation d'un produit de panification selon la présente invention, on liquéfie une matière première amylacée en présence d'eau avec au moins une carbohydrase, on ajoute cette matière première amylacée liquéfiée à de l'eau, de l'huile végétale, une matière première amylacée et de la lécithine, de manière à obtenir une émulsion, on traite thermiquement cette émulsion, on la sèche, de manière à obtenir une poudre, on incorpore 3-10 parties en poids de cette poudre à un mélange comprenant 40-57 parties en poids de farine de blé, au plus 6 parties en poids de sucre, au plus 2 parties en poids de sel, au plus 3 parties en poids d'agent levant, au plus 2 parties en poids d'émulsifiant, au plus 2 parties en poids d'alpha-amylase, 15-35 parties en poids d'eau, au plus 10 parties en poids de matière grasse, au plus 3 parties en poids de gluten et au plus 4 parties en poids de lait, de manière à obtenir une pâte homogène.

On a constaté avec surprise que le procédé de préparation selon la présente invention permet de réaliser des produits de panification pouvant être réchauffés aux micro-ondes et dont l'aspect doré, la texture croustillante en surface et moelleuse à l'intérieur ainsi que le goût et l'arôme sont semblables à ceux des produits de panification traditionnels réchauffés dans un four conventionnel. En effet, la présente invention permet, notamment, de résoudre les problèmes d'hétérogénéité de la distribution de la teneur en eau de tels produits, lors de la réchauffe aux micro-ondes.

Dans la suite de la description, on emploiera l'expression "produit microondable" pour désigner un produit pouvant être réchauffé aux micro-ondes.

De plus, dans la suite de la description, on emploiera l'expression "matière première amylacée" pour désigner, notamment, une farine ou une semoule de blé dur, de blé tendre, de riz, d'orge ou de maïs.

Enfin, dans la suite de la description, on emploiera l'expression "produit de panification" notamment pour désigner une pâte crue, précuite ou cuite destinée à la fabrication de snacks, de sandwichs ou de entremets, par exemple.

Dans le procédé de préparation selon la présente invention, on liquéfie donc une matière première amylacée en présence d'eau avec au moins une carbohydrase, de manière à gélatiniser la matière première amylacée et à réduire sa viscosité. On peut liquéfier la matière première amylacée avec 0,05-0,5% d'alpha-amylase à 50-85° C pendant 20-90 min, par exemple.

Après avoir liquéfié la matière première amylacée, on peut effectuer une étape de séchage, de manière à obtenir une poudre et à favoriser un mélange plus intime de cette matière première amylacée liquéfiée avec les autres ingrédients, par exemple.

On ajoute ensuite cette matière première amylacée liquéfiée à de l'eau, de l'huile végétale, une matière première amylacée et de la lécithine, de manière à obtenir une émulsion. On peut ajouter 10-40% de cette matière première amylacée liquéfiée, sous forme séchée ou liquide, à 20-50% de matière première amylacée, au plus 40% d'eau, au plus 5% d'huile végétale et au plus 0,6% de lécithine.

On traite thermiquement cette émulsion, de manière à la stabiliser. En effet, au cours de ce traitement thermique, les grains d'amidon de la matière première amylacée gélatinisent et la lécithine, qui est un émulsifiant, joue un rôle tensioactif en liant l'huile végétale aux grains d'amidon. On peut traiter thermiquement cette émulsion à 115-140°C pendant 20 s à 2 min, par exemple. On peut notamment la traiter thermiquement par injection de vapeur.

Puis, on sèche l'émulsion stabilisée, de manière à obtenir une poudre. De préférence, on la sèche sur cylindre chauffé à la vapeur saturée à 70-195° C durant 5-30 s. On peut également la sécher par pulvérisation ou par lyophilisation, par exemple.

On incorpore donc 3-10 parties en poids de cette poudre à un mélange comprenant 40-57 parties en poids de farine de blé, au plus 6 parties en poids de sucre, au plus 2 parties en poids de sel, au plus 3 parties en poids d'agent levant, au plus 2 parties en poids d'émulsifiant, au plus 2 parties en poids d'alpha-amylase, 15-35 parties en poids d'eau, au plus 10 parties en poids de matière grasse, au plus 3 parties en poids de gluten et au plus 4 parties en poids de lait, de manière à obtenir une pâte homogène.

On peut alors cuire cette pâte dans un four conventionnel à 200-250° C pendant 10-45 min ou dans un cuiseur à bandes à 190-225° C pendant 2-20 min, par exemple.

Avant ou après l'étape de cuisson, on peut disposer à l'intérieur ou sur le produit de panification des morceaux de viande ou de poisson, une sauce, des légumes ou des fruits entiers et/ou en morceaux, du fromage, des épices et/ou des céréales, par exemple.

Si l'on souhaite réaliser un produit de panification salé selon la présente invention, on peut disposer, sur ou à l'intérieur de ce dernier, des morceaux de viande ou de poisson, une sauce, des légumes entiers et/ou en morceaux, du fromage, des épices et/ou des céréales, par exemple.
La viande peut être du boeuf, du poulet, de la dinde, du veau, du porc ou des produits de charcuterie, comme du jambon, de la saucisse ou du salami, par exemple.
Le poisson peut être du cabillaud, du saumon, de la sole ou du colin, par exemple. On peut ajouter les morceaux de viande ou de poisson précuits ou à l'état cru, par exemple. On peut également ajouter la viande ou le poisson haché dans la sauce, par exemple.

Les légumes entiers et/ou en morceaux peuvent être des tomates, des poivrons, des champignons, des graines de mais, des oignons, des carottes, des petits pois, du céleri, des haricots, des pommes de terre ou des brocolis, par exemple.
On peut blanchir ou précuire les légumes entiers et/ou en morceaux avant de les ajouter au produit de panification, par exemple. On peut également les ajouter sous forme de purée, par exemple.

Le fromage peut être du gruyère, de la mozzarella, du cheddar ou de l'emmenthal, par exemple.

La sauce peut être de la moutarde, du ketchup, de la sauce tomate ou une sauce blanche, par exemple.

Les céréales peuvent être du riz ou de l'orge perlé que l'on peut précuire ou du sésame ou du pavot, par exemple.

Les épices peuvent être du poivre, du romarin, de la sauge, du gingembre, du thym, du piment ou du cumin, par exemple.

Si l'on souhaite réaliser un produit de panification sucré selon la présente invention, on peut disposer, sur ou à l'intérieur de ce dernier, des fruits entiers et/ou en morceaux, une sauce, des épices et/ou des céréales, par exemple.

Les fruits peuvent être des pommes, des poires, des cerises, des ananas ou des abricots, par exemple

La sauce peut être une sauce à la vanille, une sauce au caramel ou une sauce au chocolat, par exemple.

Les épices peuvent être de la cannelle, de la vanille, par exemple.

Les céréales peuvent être du riz ou de l'orge perlé que l'on peut précuire, par exemple.

On peut également stocker le produit de panification, avant ou après l'étape de cuisson, à une température de - 40° C à + 10° C, par exemple.

On peut réchauffer le produit de panification aux micro-ondes pendant 20 s à 10 min, de manière à obtenir un produit de panification à la texture moelleuse, prêt à consommer, par exemple. On peut également réchauffer le produit de panification selon la présente invention dans un four conventionnel à 110-200° C pendant 10-40 min ou dans un grille-pain pendant 1-2 min, par exemple.

Le produit de panification présente, après réchauffe aux micro-ondes, un aspect doré et une texture croustillante en surface et moelleuse à l'intérieur.

Le procédé et le produit de panification selon la présente invention sont décrits plus en détails dans les exemples ci-après qui sont précédés d'un test d'analyse de la texture et d'un exemple comparatif. Les pourcentages sont donnés en poids, sauf indication contraire.

### Test d'analyse de la texture

Pour analyser la texture d'un produit de panification cuit et réchauffé aux micro-ondes, on mesure, à l'aide d'un analyseur de texture muni d'un dispositif de mesure de force décrit par Dahle, L.K. and Sambuchi, N. (Application of a devised universal testing machine procedures for mesuring texture of bread and jam-filled cookies, Cereal Food World, 32-7, 1987), le maximum de la force à appliquer necessaire pour le casser ainsi que l'énergie correspondante à cette force.

Pour ce faire, on place le produit de panification sur un plateau circulaire évidé en son milieu d'un disque de 40 mm de diamètre et l'on presse un piston présentant une base circulaire de 30 mm de diamètre, sur la face supérieur du produit de panification, tout en mesurant la force nécessaire pour le casser et l'énergie correspondante.

On mesure la force nécessaire pour casse un produit de panification selon la présente invention et l'énergie correspondante à cette force et l'on compare ces mesures à celles effectuées sur un produit de panification traditionnel.

### Exemple comparatif

On prépare donc un produit de panification selon le procédé de préparation de la présente invention de la manière telle que décrite à l'exemple 1 jusqu'à l'obtention des petits pains ronds que l'on stocke alors à -18° C.

Par comparaison, on prépare un produit de panification traditionnel. Pour ce faire, on prépare un mélange contenant 56% de farine de blé tendre, 2,5% de saccharose, 1,5% de sel, 1,9% de lait écrémé en poudre, 1% de gluten, 28,2% d'eau, 4,7% d'huile de tournesol, 2,2% de levure, 1% d'enzyme et 1% d'émusifiant, de manière à obtenir une pâte homogène.

On portionne cette pâte en pâtons de 30 g que l'on cuit à 180° C pendant 15 min dans un four conventionnel, de manière à obtenir des petits pains ronds.

Puis, on les stocke à - 18° C.

Après stockage à - 18° C, on réchauffe, aux micro-ondes pendant 1 min, un petit pain rond obtenu par la mise en oeuvre du procédé de préparation selon la présente invention et un petit pain rond traditionnel.

Puis, on mesure, immédiatement après réchauffe aux micro-ondes et 15 min après réchauffe aux micro-ondes, la force appliquée nécessaire pour casser le petit pain rond obtenu par la mise en oeuvre du procédé de préparation selon la présente invention et le petit pain rond traditionnel ainsi que l'énergie correspondante à ces forces. On compare alors les valeurs mesurées.

Les valeurs de la force appliquée, nécessaire pour casser le petit pain rond obtenu par la mise en oeuvre du procédé de préparation et le petit pain rond traditionnel, immédiatement après réchauffe aux micro-ondes, ainsi que les valeurs de l'énergie correspondante à ces forces sont mentionnées dans le tableau I ci-après.

**Tableau I**

| **Petit pain rond** | **Force appliquée (N)** | **Energie (J)** |
|---|---|---|
| selon la présente invention | 3,66 | 0,05 |
| traditionnel | 5,06 | 0,08 |

Ces mesures mettent en évidence le fait que le petit pain rond traditionnel est plus dur, immédiatement après réchauffe aux micro-ondes, que le petit pain rond selon la présente invention. En effet, il faut appliquer une force plus importante pour casser le petit pain rond traditionnel.

Les valeurs de la force appliquée, nécessaire pour casser le petit pain rond obtenu par la mise en oeuvre du procédé selon la présente invention et le petit pain rond traditionnel, 15 min après réchauffe aux micro-ondes, ainsi que les valeurs de l'énergie correspondante à ces forces sont mentionnées dans le tableau II ci-après.

**Tableau II**

| **Petit pain rond** | **Force appliquée (N)** | **Energie (J)** |
|---|---|---|
| selon la présente invention | 6,55 | 0,14 |
| traditionnel | 10 | 0,17 |

Ces mesures mettent en évidence le fait que, si on laisse refroidir pendant 15 min après la réchauffe aux micro-ondes, le petit pain rond traditionnel présente une texture plus dure que le petit pain rond obtenu par la mise en oeuvre du procédé selon la présente invention. En effet, il faut appliquer une force plus importante pour casser le petit pain rond traditionnel.

### Exemple 1

On prépare un sandwich au fromage et au jambon, selon le procédé de préparation de la présente invention.

Pour ce faire, on mélange 199,8 kg de farine de blé tendre avec 286 kg d'eau que l'on liquéfie avec 0,2 kg d'alpha-amylase à 60° C pendant 30 min.

On ajoute ensuite 27,5% de cette farine de blé tendre liquéfiée à 39,5% de farine de blé tendre, 1,4% d'huile de palme, 0,4% de lécithine de soja et 31,4% d'eau, de manière à obtenir une émulsion que l'on stabilise par traitement thermique.

On effectue ce traitement thermique par injection de vapeur à 131° C pendant 2 min.

Puis, on sèche cette émulsion stabilisée sur cylindre chauffé à la vapeur saturée à 170° C pendant 15 s, de manière à obtenir une poudre.

On incorpore alors 4 parties en poids de cette poudre à un mélange comprenant 52 parties en poids de farine de blé tendre, 2,5 parties en poids de saccharose, 1,5 parties en poids de sel, 1,9 parties en poids de lait écrémé en poudre, 1 parties en poids de gluten, 28,2 parties en poids d'eau, 4,7 parties en poids d'huile de tournesol, 2,2 parties en poids de levure, 1 parties en poids d'enzyme et 1 parties en poids d'émusifiant, de manière à obtenir une pâte homogène.

On portionne cette pâte en patons de 30 g que l'on cuit à 180° C pendant 15 min dans un four conventionnel, de manière à obtenir des petits pains ronds.

On découpe ces petits pains ronds et l'on dispose à l'intérieur une garniture comprenant 61,5% de gruyère découpé en petits cubes, 20,4% de jambon cuit, 0,4% de sel, 0,07% de poivre, 11,3% de poireaux frais en rondelles, 3,3% d'oignons deshydratés, 2% de fromage en poudre et 1% d'arôme type jambon, de manière à réaliser des sandwichs au fromage et au jambon.

Puis, on stocke ces sandwichs à - 18° C.

Le consommateur peut ainsi réchauffer ces sandwichs aux micro-ondes pendant 2 min, de manière à obtenir des sandwichs au fromage et au jambon, dont la pâte présente une texture moelleuse.

### Exemple 2

On procède de la manière telle que décrite à l'exemple 1, à l'exception du fait que l'on effectue une étape de séchage après l'étape de liquéfaction.

Pour ce faire, après avoir liquéfié la farine de blé tendre, on la sèche sur cylindre chauffé à la vapeur saturée à 135° C pendant 12 s, de manière à obtenir une poudre.

### Exemple 3

On prépare des sandwichs aux tomates.

Pour ce faire, on procède de la manière telle que décrite à l'exemple 1, à l'exception du fait que l'on dispose à l'intérieur des petits pains une garniture aux tomates.

après l'étape de cuisson, on découpe les petits pains ronds et l'on dispose à l'intérieur une garniture préparée à partir de 35% de concentré de tomates, 0,5% de sel, 0,1% de poivre blanc moulu, 0,1% d'ail en poudre, 1% d'oignons rotis en poudre, 14,6% de flocons de pommes de terre, 5,2% de maltodextrine et 43,5% de fromage cheddar en poudre, de manière à réaliser des sandwichs aux tomates.

Puis, on stocke ces sandwichs à - 18° C.

Le consommateur peut ainsi réchauffer ces sandwichs aux micro-ondes pendant 2 min, de manière à obtenir des sandwichs aux tomates, dont la pâte présente une texture moelleuse.

### Exemple 4

On prépare des petits pains à l'arôme fraise.

Pour ce faire, on procède de la manière telle que décrite à l'exemple 1, à l'excption du fait que l'on dispose à l'intérieur des petits pains une garniture à l'arôme de fraises.

On dispose ainsi à l'intérieur des petits pains découpés une garniture préparée à partir de 27,1% de sucre, 20% de dextrose, 0,3% d'acide citrique, 7% d'eau, 34% de matière grasse, 0,5% de lécithine de soja, 0,1% d'arôme de fraise en poudre, 10% de yogourt en poudre et 1% d'arôme de fraise liquide.

Puis, on stocke ces sandwichs à - 18° C.

Le consommateur peut ainsi réchauffer ces petits pains à l'arôme de fraises aux micro-ondes pendant 2 min, de manière à obtenir des petits pains, dont la pâte présente une texture moelleuse.

## Revendications

1. Procédé de préparation d'un produit de panification destiné à être réchauffé aux micro-ondes, dans lequel:
- on liquéfie une matière première amylacée en présence d'eau avec au moins une carbohydrase,
- on ajoute cette matière première amylacée liquéfiée à de l'eau, de l'huile végétale, une matière première amylacée et de la lécithine, de manière à obtenir une émulsion,
- on traite thermiquement cette émulsion,
- on la sèche, de manière à obtenir une poudre,
- on incorpore 3-10 parties en poids de cette poudre à un mélange comprenant 40-57 parties en poids de farine de blé, au plus 6 parties en poids de sucre, au plus 2 parties en poids de sel, au plus 3 parties en poids d'agent levant, au plus 2 parties en poids d'émulsifiant, au plus 2 parties en poids d'alpha-amylase, 15-35 parties en poids d'eau, au plus 10 parties en poids de matière grasse, au plus 3 parties en poids de gluten et au plus 4 parties en poids de lait, de manière à obtenir une pâte homogène.

2. Procédé selon la revendication 1, dans lequel on liquéfie la matière première amylacée avec 0,05-0,5% d'alpha-amylase à 50-85° C pendant 20-90 min.

3. Procédé selon la revendication 1, dans lequel on effectue une étape de séchage après avoir liquéfié la matière première amylacée.

4. Procédé selon la revendication 1, dans lequel on ajoute 10-40% de la matière première amylacée liquéfiée à 20-50% de matière première amylacée, au plus 40% d'eau, au plus 5% d'huile végétale et au plus 0,6% de lécithine.

5. Procédé selon la revendication 1, dans lequel on traite thermiquement l'émulsion à 115-140° C pendant 20 s à 2 min.

6. Procédé selon la revendication 1, dans lequel on sèche l'émulsion sur cylindre chauffé à la vapeur saturée à 70-195° C durant 5-30 s, de manière à obtenir une poudre.

7. Procédé selon la revendication 1, dans lequel on cuit la pâte homogène.

8. Procédé selon la revendication 7, dans lequel, avant ou aprés l'étape de cuisson, on dispose à l'intérieur ou sur le produit de panification des morceaux de viande ou de poisson, une sauce, des légumes ou des fruits entiers et/ou en morceaux, du fromage, des épices et/ou des céréales.

## Claims

1. Method for preparing a breadmaking product intended to be heated by microwaves, wherein:
- a starchy raw material is liquefied in the presence of water with at least one carbohydrase,
- vegetable oil, a starchy raw material and lecithin are added to this starchy raw material liquefied with water so as to obtain an emulsion,
- this emulsion is heat treated,
- it is dried so as to obtain a powder,
- 3-10 parts by weight of this powder are incorporated in a mixture comprising 40-57 parts by weight of wheat flour, at most 6 parts by weight of sugar, at most 2 parts by weight of salt, at most 3 parts by weight of a raising agent, at most 2 parts by weight of an emulsifier, at most 2 parts by weight of alpha-amylase, 15-35 parts by weight of water, at most 10 parts by weight of fats, at most 3 parts by weight of gluten and at most 4 parts by weight of milk, so as to obtain a homogeneous dough.

2. Method according to claim 1, wherein the starchy raw material is liquefied with 0.05-0.5% alpha-amylase at 50-85°C for 20-90 min.

3. Method according to claim 1, wherein a drying step is carried out after having liquefied the starchy raw material.

4. Method according to claim 1, wherein 10-40% of the liquefied starchy raw material is added to 20-50% of starchy raw material, at most 40 % water, at most 5% vegetable oil and at most 0.6% lecithin.

5. Method according to claim 1, wherein the emulsion is heat treated at 115-140°C for 20 s to 2 min.

6. Method according to claim 1, wherein the emulsion is dried on a cylinder heated with saturated steam at 70-195°C for 5-30 s, so as to obtain a powder.

7. Method according to claim 1, wherein the homogeneous dough is baked.

8. Method according to claim 7, wherein, before or after the baking step, pieces of meat or fish, a sauce, whole and/or pieces of fruit or vegetables, cheese, spices and/or cereals are deposited inside or on the breadmaking product.

## Patentansprüche

1. Verfahren zur Herstellung eines durch Mikrowellen aufwärmbaren Brotprodukts, bei dem man
- ein stärkehaltiges Ausgangsmaterial in Gegenwart von Wasser mit mindestens einer Carbohydrase verflüssigt,
- dieses verflüssigte stärkehaltige Ausgangsmaterial zu Wasser, Pflanzenöl, einem stärkehaltigen Ausgangsmaterial und Lecithin so zugibt, dass man eine Emulsion erhält,
- diese Emulsion thermisch behandelt,
- sie so trocknet, dass man ein Pulver erhält,
- 3-10 Gewichtsteile dieses Pulvers in eine Mischung einarbeitet, die 40-57 Gewichtsteile Weizenmehl, höchstens 6 Gewichtsteile Zucker, höchstens 2 Gewichtsteile Salz, höchstens 3 Gewichtsteile Treibmittel, höchstens 2 Gewichtsteile Emulgator, höchstens 2 Gewichtsteile alpha-Amylase, 15-35 Gewichtsteile Wasser, höchstens 10 Gewichtsteile Fett, höchstens 3 Gewichteteile Gluten und höchstens 4 Gewichtsteile Milch enthält, so dass man einen homogenen Teig erhält.

2. Verfahren nach Anspruch 1, bei dem man das stärkehaltige Ausgangsmaterial während 20-90 min bei 50-85°C mit 0,05-0,5% alpha-Amylase verflüssigt.

3. Verfahren nach Anspruch 1, bei dem man einen Trocknungsschritt vornimmt, nachdem man das stärkehaltige Ausgangsmaterial verflüssigt hat.

4. Verfahren nach Anspruch 1, bei dem man 10-40% verflüssigtes stärkehaltiges Ausgangsmaterial zu 20-50% stärkehaltigem Ausgangsmaterial, höchstens 40% Wasser, höchstens 5% Pflanzenöl und höchstens 0,6% Lecithin zugibt.

5. Verfahren nach Anspruch 1, bei dem man die Emulsion während 20 s bis 2 min bei 115-140°C thermisch behandelt.

6. Verfahren nach Anspruch 1, bei dem man die Emulsion während 5-30 s auf einer mit Sattdampf beheizten Walze bei 70-195°C so trocknet, dass man ein Pulver erhält.

7. Verfahren nach Anspruch 1, bei dem den homogenen Teig bäckt.

8. Verfahren nach Anspruch 7, bei dem man vor oder nach dem Backschritt im Inneren des Brotprodukts oder auf ihm Fleisch- oder Fischstücke, Sauce, ganzes Gemüse oder Obst, ganz und/oder in Stücken, Käse, Gewürze und/oder Cerealien aufbringt.
